(19) Europäisches Patentamt
European Patent Office
Office européen des brevets

(11) **EP 2 207 313 A1**

(12) **DEMANDE DE BREVET EUROPEEN**

(43) Date de publication:
**14.07.2010 Bulletin 2010/28**

(51) Int Cl.:
***H04L 12/56*** *(2006.01)*

(21) Numéro de dépôt: **10150119.5**

(22) Date de dépôt: **05.01.2010**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **12.01.2009 FR 0950142**

(71) Demandeur: **Alcatel Lucent**
**75008 Paris (FR)**

(72) Inventeurs:
- **Ciavaglia, Laurent**
 **91620 Nozay (FR)**
- **El Khattar, Benaïssa**
 **91620 Nozay (FR)**

(74) Mandataire: **Thibaud, Jean-Baptiste**
**Alcatel Lucent**
**Intellectual Property & Standards**
**54 rue La Boétie**
**75008 Paris (FR)**

(54) **Procédé de routage d'une communication dans un réseau de communication et système de gestion de routage associé**

(57) La présente invention concerne un procédé de routage d'une communication dans un réseau (10) de communication. La présente invention concerne également-ment un système de gestion de routage d'un tel réseau de communication (10). Le réseau de communication (10) comportant une pluralité de noeuds (Ni) et une pluralité de liens physiques (Li) reliant chacun directement deux noeuds (Ni) dudit réseau (10), selon le procédé de l'invention, il est déterminé, pour le routage d'une nouvelle communication, un coût (Ci) associé à chaque lien (Li) physique dudit réseau (10), ledit coût (Ci) étant fonction de la charge (Ui) dudit lien physique (Li) et de la charge moyenne (Um) sur ladite pluralité de liens physiques dudit réseau (10 ) de communication puis il est choisi de router ladite nouvelle communication sur un ensemble de liens physiques (Li) pour lequel un coût global (Cg), calculé à partir desdits coûts (Ci), est minimisé.

FIG. 1a

**Description**

L'invention concerne les réseaux de communication et en particulier un procédé de routage d'une communication dans un réseau de communication. L'invention concerne également un système de gestion de routage d'un réseau de communication.

Un réseau de communication comprend classiquement un ensemble d'équipements de réseau, comme des routeurs, reliés les uns aux autres par des liens physiques et constituant des noeuds chargés de router des communications (ou flux de données) entre des terminaux de communication ou des serveurs.

Les réseaux de communication peuvent être utilisés selon un premier mode fonctionnent classiquement appelé "mode orienté connexion" ("connection oriented" en anglais) ou selon un second mode dit "non orienté connexion" ("connection less" en anglais).

En mode orienté connexion, une communication est établie à l'aide d'un mécanisme de signalisation puis routée le long d'un chemin entre un noeud entrant, recevant la communication, et un noeud sortant du réseau de communication. Le chemin consiste en une succession de liens physiques reliant les noeuds entrant et sortant, directement ou via au moins un noeud intermédiaire. Classiquement, le réseau de communication possède une redondance de sorte que plusieurs chemins existent entre le noeud entrant et le noeud sortant. Ainsi, lorsqu'un opérateur doit router une nouvelle communication, celui-ci doit sélectionner un chemin, parmi l'ensemble des chemins possibles, qu'il juge le meilleur pour le routage de la nouvelle communication.

En mode non-orienté connexion, une communication est réalisée entre au moins deux noeuds d'une connexion virtuelle du type VLAN ou telle qu'une EVC (initiales anglo-saxonnes mises pour "Ethernet Virtual Connection") lorsque le réseau est un réseau Ethernet métropolitain de type "Ethernet Carrier Network".

Classiquement, ce type de réseau est administré au moyen de protocoles utilisant des arbres couvrants (Spanning Tree en terminologie anglo-saxonne), par exemple Multiple Spanning Tree Protocol (MSTP). L'utilisation de tels arbres permet, entre autre, d'éviter des phénomènes de boucles lors du routage d'une communication. Les arbres couvrants comprennent l'ensemble des éléments du réseau et comportent une racine qui correspond généralement à un routeur du réseau. Chaque branche d'un arbre couvrant correspond à un lien physique du réseau.

Router une communication dans un réseau non-orienté connexion consiste à assigner la connexion virtuelle par laquelle doit être réalisée la communication à un arbre couvrant de façon à ce que la communication soit routée uniquement selon les branches de cet arbre.

Ainsi, lorsqu'un opérateur doit router une nouvelle communication, celui-ci doit sélectionner un arbre, parmi l'ensemble des arbres couvrants existant, qu'il juge le meilleur pour l'assignation de la connexion virtuelle.

Il est à noter qu'un réseau peut comporter à la fois un sous-ensemble d'éléments capables de fonctionner dans un mode orienté connexion et en parallèle, un sous-ensemble d'éléments fonctionnant dans un mode non orienté connexion.

Quel que soit le type de réseau utilisé, lorsqu'une nouvelle communication doit être routée pour un client, ce dernier exige généralement que l'opérateur lui garantisse une certaine qualité de service. Le niveau de qualité de service est classiquement fonction du type de la communication. L'opérateur doit être en mesure de s'assurer qu'il sera capable de router la communication pour fournir le service à l'utilisateur avec le niveau de qualité de service requis. L'opérateur doit donc déterminer un ensemble de liens physiques pour le routage de la nouvelle communication qui permet de satisfaire les exigences du client.

Pour sélectionner un ensemble de liens pour le routage de la communication, les opérateurs peuvent faire appel à différentes méthodes qui utilisent une ou plusieurs caractéristiques relatives aux liens et aux éléments du réseau de communication.

Par exemple, dans le cas du mode orienté connexion, certaines méthodes de routage déterminent le nombre de sauts (nombre de noeuds intermédiaires ou nombre de liens utilisés) sur chaque chemin possible entre le noeud entrant et le noeud sortant. La nouvelle communication est alors routée au moyen du chemin possédant le plus petit nombre de sauts.

Un autre critère couramment utilisé consiste à déterminer le coût de fonctionnement global (aussi appelé coût administratif global) des différents ensembles de liens alternatifs possibles. Dans ce cas, l'ensemble de liens sélectionné pour le routage de la communication est celui qui minimise le coût de fonctionnement. Le coût de fonctionnement global est alors la somme des coûts de fonctionnement associés à chaque lien de l'ensemble de liens.

Une autre possibilité consiste à déterminer la capacité des différents liens constituant chaque ensemble de liens et de sélectionner l'ensemble constitué par des liens de grandes capacités.

Parmi les caractéristiques associées aux liens, certaines représentent des coûts monétaires. Tel est le cas lorsque le coût de fonctionnement global d'un ensemble de liens possible est calculé à partir des coûts de fonctionnement des liens qui le composent. D'autres consistent en propriétés techniques telle que la capacité des liens. Pour autant, dans toutes les méthodes, on parle couramment d'un coût associé à un lien et d'un coût global associé à un ensemble de liens déterminé à partir des coûts associés à chaque lien de l'ensemble.

Bien que très répandue car relativement simple à implémenter, l'utilisation des coûts cités conduit généralement à router les communications en utilisant toujours les mêmes ensembles de liens. En conséquence, le routage des communications par de telles méthodes provoque généralement un déséquilibrage de la charge globale sur l'ensemble des liens du réseau de communication.

Ce déséquilibrage engendre parfois la saturation (aussi appelée congestion) de certains liens. Or, la congestion d'un lien peut engendrer des ruptures de communication ou altérer sévèrement la qualité de service des communications qui sont routées en utilisant ce lien.

Les différents éléments du réseau de communication sont classiquement implémentés avec des processus de reroutage permettant de rerouter un certain nombre de communications. Le reroutage a pour but de décongestionner le lien saturé.

Ces processus de reroutage sont couramment fondés sur des solutions d'équilibrage de charge (« load balancing solution » en terminologie anglo-saxonne). En effet, dans la mesure où le lien congestionné relie deux noeuds du réseau, les processus de reroutage déterminent classiquement l'ensemble des routes possibles entre ces deux noeuds et reroutent un certain nombre de communications qui transitaient initialement sur le lien congestionné par l'intermédiaire de routes alternatives astucieusement déterminées.

En reroutant des communications sur des routes alternatives, la charge du lien congestionné est répartie (balancée) sur les différents liens composant les routes alternatives utilisées pour le reroutage des communications.

Cependant, les solutions d'équilibrage de charge sont également basées sur les coûts précédemment décrits. Ainsi, bien que la charge du lien congestionné soit répartie entre plusieurs routes alternatives, l'utilisation des coûts cités conduit généralement à rerouter les communications en utilisant toujours les mêmes routes. En conséquence, le reroutage des communications par de tels processus de reroutage n'aboutit pas non plus à un équilibrage global de la charge sur l'ensemble des différents liens du réseau de communication.

D'autres méthodes, plus difficiles à mettre en oeuvre car nécessitant plus de calculs, sont basées sur des combinaisons des critères précédemment mentionnés. En utilisant de telles combinaisons pour le reroutage des communications, la charge induite par les différentes communications transitant sur le réseau de communication est mieux repartie sur les différents liens du réseau une fois le reroutage des communications transitant sur le lien congestionné effectué.

Cependant, les méthodes basées sur des combinaisons de critères sont peu applicables dans les réseaux constitués d'un grand nombre de noeuds car il est difficile de gérer le grand nombre de coûts associés à chaque lien du réseau et de déterminer, dans un temps limité, les meilleures routes possibles lorsqu'un trop grand nombre de routes alternatives existe.

Le but de l'invention est de permettre aux opérateurs de réseau de communication d'anticiper les congestions en permettant de maintenir un équilibrage de la charge globale sur l'ensemble des liens du réseau, notamment lors de la détermination de l'ensemble de liens pour le routage d'une nouvelle communication.

Dans ce but, un premier objet de l'invention concerne un procédé de routage d'une communication dans un réseau de communication comportant une pluralité de noeuds et une pluralité de liens physiques reliant chacun directement deux noeuds dudit réseau de communication, **caractérisé en ce qu**'on détermine, pour le routage d'une nouvelle communication, un coût associé à chaque lien physique dudit réseau, ledit coût étant fonction de la charge dudit lien physique et de la charge moyenne sur ladite pluralité de liens physiques dudit réseau de communication, et en ce que l'on choisit de router ladite nouvelle communication sur un ensemble de liens physiques pour lequel un coût global, calculé à partir desdits coûts, est minimisé.

Lorsque le réseau est de type orienté connexion, l'ensemble de liens physiques correspond à un chemin unique défini par une succession de liens physiques reliant un noeud entrant recevant ladite nouvelle communication et un noeud sortant du réseau de communication directement ou via au moins un noeud intermédiaire. Le coût global est alors la somme des coûts associés à chaque lien physique constituant ledit chemin et le procédé comprend alors les étapes de :

- détermination des différents chemins possibles entre ledit noeud entrant et ledit noeud sortant ;
- sélection du chemin minimisant ledit coût global parmi les différents chemins possibles pour router ladite nouvelle communication.

Alternativement, lorsque le réseau est de type non orienté connexion et qu'il comporte une pluralité d'arbres couvrants associés chacun à un noeud racine du réseau, une communication doit être routée sur une connexion virtuelle assignée à l'un des arbres couvrants. L'ensemble de liens physiques correspond alors à celui des arbres couvrants minimisant le coût global pour l'assignation de la connexion virtuelle.

Deux possibilités pour le calcul du coût global existent alors.

Selon la première possibilité, le coût global est la somme des coûts associés à chaque lien physique constituant l'arbre couvrant et le procédé comprend une étape de sélection dudit arbre couvrant minimisant le coût global pour l'assignation de ladite connexion virtuelle.

Selon la deuxième possibilité, le procédé comprend les étapes de :

- détermination, pour chacun des arbres couvrant, du coût associé à chaque lien physique dudit réseau en considérant que ladite connexion virtuelle a été assignée à l'arbre couvrant et calculer le coût global en sommant les coûts associés à la pluralité de liens physiques ;
- sélection dudit arbre couvrant minimisant le coût global pour l'assignation de ladite connexion virtuelle.

Avantageusement, un coût de déploiement est calculé sur le réseau pour un ensemble de communications effectivement routées sur le réseau et qui ont été reçues selon un ordre de séquencement donné.

De plus, un redéploiement, hors ligne de l'ensemble des communications est possible. Un tel redéploiement comprend :

- le recalcul, pour chaque communication dudit ensemble, d'un ensemble de liens physiques qui minimise le coût global en changeant l'ordre de séquencement des communications dudit ensemble ;
- la détermination de l'ordre de séquencement des communications pour lequel le coût de déploiement est minimum ; et
- le redéploiement des communications dudit ensemble selon l'ordre de séquencement qui minimise ledit coût de déploiement.

Au cours d'un redéploiement il peut être avantageux de créer des règles d'ordonnancement à partir de statistiques effectuées à partir du coût de déploiement calculé pour chaque ordre de séquencement et des caractéristiques techniques des communications dudit ensemble de communications.

Ces règles d'ordonnancement peuvent effectivement être utilisées lorsque le réseau reçoit simultanément une pluralité de nouvelles communications pour déterminer le meilleur ordre de routage possible pour router ces nouvelles communications.

Dans le cas où de tels règles ont été créés, lorsque plusieurs nouvelles communications sont reçues simultanément par le réseau, on détermine un ordre de routage avec lequel les communications doivent être routées en fonction des caractéristiques de chacune des communications et des règles d'ordonnancement et route les nouvelles communications selon l'ordre de routage déterminé, le routage de chaque nouvelle communication étant réalisé suivant un ensemble de liens physiques qui minimise le coût global.

Un second objet de l'invention concerne un système de gestion de routage d'une communication dans un réseau de communication comportant une pluralité de noeuds et une pluralité de liens physiques reliant chacun directement deux noeuds du dit réseau de communication, **caractérisé en ce que** ledit système de gestion est adapté, pour le routage d'une nouvelle communication :

- à déterminer un coût associé à chaque lien physique dudit réseau, ledit coût étant fonction de la charge dudit lien physique et de la charge moyenne sur ladite pluralité de liens physiques dudit réseau ; et
- à choisir de router ladite nouvelle communication sur un ensemble de liens physiques pour lequel un coût global, calculé à partir desdits coûts, est minimisé.

D'autres caractéristiques et avantages de l'invention apparaîtront à la lecture de la description qui va suivre en référence aux dessins annexés dans lesquels :

- La figure 1a représente différents noeuds et liens d'un réseau orienté connexion par lequel des communications sont routées conformément au procédé de l'invention.
- La figure 1b représente différents noeuds et liens d'un réseau non orienté connexion par lequel des communications sont routées conformément au procédé de l'invention.
- La figure 2a illustre les calculs de coûts effectués pour la détermination de la meilleure route pour une nouvelle communication arrivant sur le réseau de la figure 1a.
- La figure 2b illustre les calculs de coûts effectués pour la déterminer l'arbre couvrant le plus adapté pour router une nouvelle communication reçu par le réseau de la figure 1b.
- La figure 3a représente une table comprenant des calculs de coûts effectués lors d'une étape de redéploiement des communications routées dans le réseau de la figure 1a.
- La figure 3b représente une table comprenant des calculs de coûts effectués lors d'une étape de redéploiement des communications routées dans le réseau de la figure 1b.

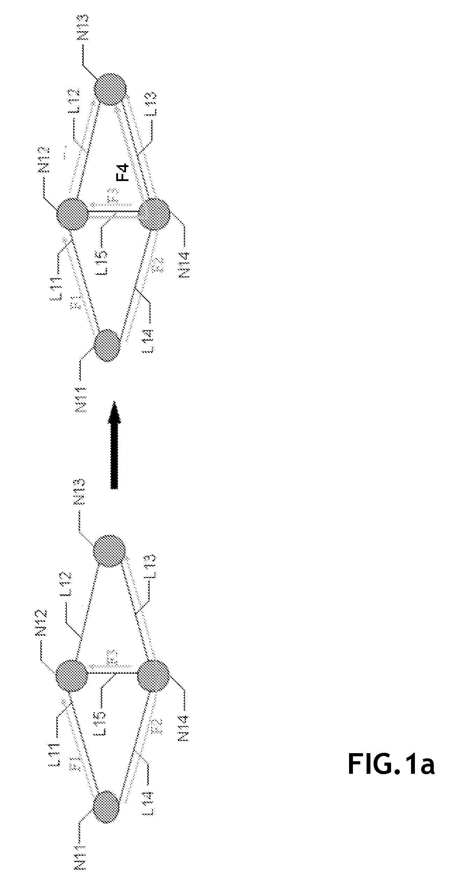

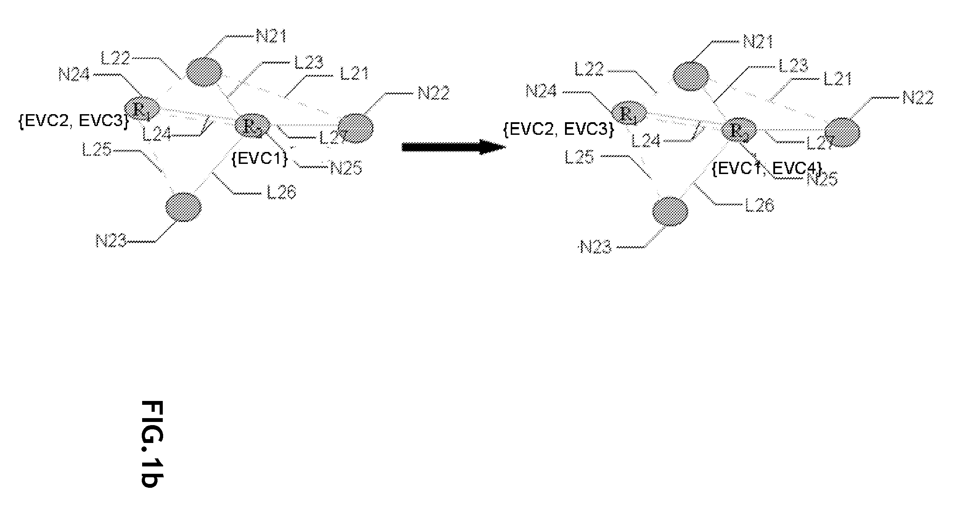

Les figures 1a et 1b représentent des réseaux 10, 20 de communication respectivement de type orienté connexion et de type non-orienté connexion. De tels réseaux comprennent un certains nombre de noeuds et de liens physiques par lesquels peuvent notamment transiter des paquets ou des signaux relatifs à une communication. Plus précisément, le réseau de communication 10 de type orienté connexion comprend quatre noeuds N11, ...N14 et cinq liens physiques L11, ..., L15 reliant chacun directement deux noeuds du réseau 10. Le réseau 20, quant à lui comprend cinq noeuds N21, ..., N25 dont deux N24 et N25 consistent en des routeurs et sept liens physiques L21 à L27.

Classiquement, de tels réseaux 10, 20 comprennent un système de gestion (non représenté) capable de déterminer, lorsqu'une nouvelle communication doit être routée sur le réseau de communication, l'ensemble de liens le plus adapté au routage de la communication.

Comme précédemment décrit, pour déterminer un tel ensemble de liens, le système de gestion utilise des coûts Ci associés aux différents liens Li composant le réseau 10, 20 de communication.

Contrairement aux différentes méthodes courantes de détermination dans lesquelles un coût associé à un lien Li représente uniquement un coût monétaire ou une caractéristique technique du lien Li, il est associé à chaque lien Li du réseau de communication, conformément au procédé de l'invention, un coût Ci fonction non seulement d'une caractéristique du lien Li mais aussi d'une caractéristique représentative de l'ensemble des liens du réseau 10, 20.

Plus précisément, à chaque lien Li physique du réseau 10, 20 est associé un coût fonction de la charge Ui du lien physique Li et de la charge moyenne Um sur la pluralité de liens physiques du réseau 10, 20.

Le système de gestion choisit alors de router une nouvelle communication sur l'ensemble de liens physiques Li pour lequel un coût global Cg, calculé à partir des coûts Ci, est minimisé pour le routage d'une nouvelle communication.

Le coût Ci associé à chaque lien Li est donnée par la formule $C_i = (U_i - U_m)^2$ dans laquelle la grandeur Ui représente la charge du lien physique Li et la grandeur Um représente la charge moyenne sur la pluralité des liens physiques du réseau.

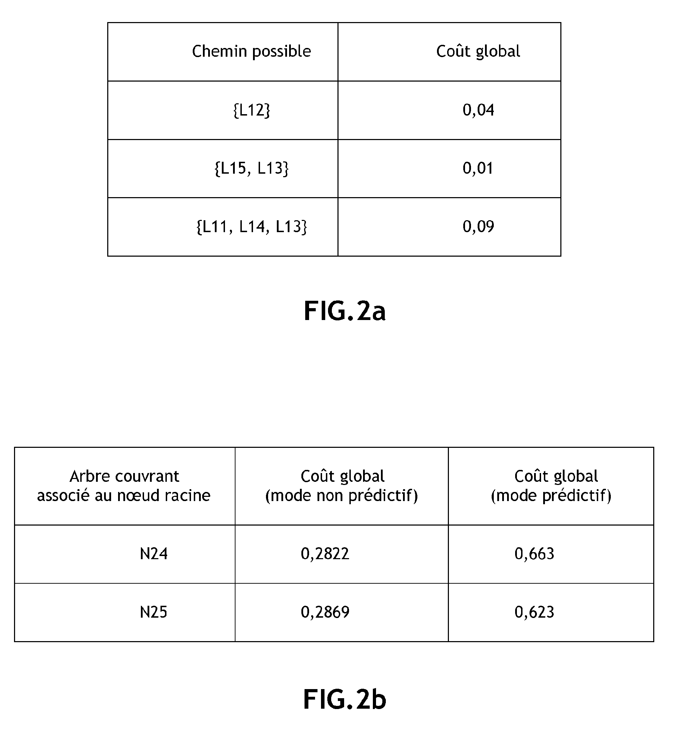

La façon dont le coût global Cg est calculée dépend du type de réseau concerné, et va dans la suite être expliquée dans un premier temps en référence aux figures 1a et 2a pour un réseau orienté connexion, puis pour un réseau non orienté connexion, en référence aux figures 1b et 2b.

Comme précédemment mentionné, en mode orienté connexion, une communication est routée le long d'un chemin entre un noeud entrant, recevant la communication, et un noeud sortant du réseau de communication. Le chemin consiste en une succession de liens reliant les noeuds entrant et sortant, directement ou via au moins un noeud intermédiaire. Bien que le chemin puisse consister uniquement en le noeud d'entrée, le noeud de sortie et le lien reliant ces deux noeuds, généralement, un chemin comporte une succession de liens reliant le noeud entrant et le noeud sortant via un ou plusieurs noeuds intermédiaires.

La figure 1a représente un réseau de communication 10 de type orienté connexion, comportant quatre noeuds N11,..., N14 et cinq liens L11,..., L15. Il est considéré que les cinq liens L11,..., L15 possèdent la même capacité. Pour simplifier la compréhension des calculs mis en oeuvre par l'invention, on considérera par la suite que la capacité de chaque lien est égale à 1.

D'autre part, on part de l'hypothèse que trois communications F1, F2, F3 sont déjà routées le long de trois chemins sur le réseau de communication 10. Une première communication F1 a pour noeud d'entrée le noeud N11 et pour noeud de sortie le noeud N12. La bande passante nécessaire pour que la communication F1 soit réalisée avec un niveau de qualité de service satisfaisant représente la moitié de la capacité de chaque lien. Cette communication F1 est routée selon le chemin défini par les noeuds N11, N12 et le lien L11.

Une seconde communication F2 est routée entre le noeud N11 et N13 selon un chemin passant par le noeud N14 et empruntant les liens L14 et L13. La communication F2 nécessite un cinquième de la capacité de chaque lien qu'elle emprunte pour être réalisée de manière satisfaisante. Parallèlement aux communications F1 et F2, une troisième communication F3 entre sur le réseau au noeud N14 et sort du réseau au noeud N12. Cette communication emprunte, entre ces deux noeuds, l'unique lien L15 et occupe un dixième de la capacité du lien L15 pour être correctement acheminée depuis le noeud N14 vers le noeud N12.

Partant de cette situation, il est alors considéré qu'une nouvelle communication F4 doit être routée sur le réseau 10. A titre d'exemple, cette nouvelle communication est reçue sur le noeud d'entrée N12 du réseau 10 et doit être routée jusqu'au noeud N13. D'autre part, la communication F4 nécessite qu'un tiers de la capacité de chaque lien du réseau 10 soit disponible pour être réalisée avec un niveau de qualité de service satisfaisant.

Le routage d'une nouvelle communication dans un réseau de communication orienté connexion consiste à sélectionner un chemin parmi une pluralité de chemins possibles entre le noeud d'entrée recevant la communication et le noeud de sortie.

Conformément au procédé de l'invention lorsque celui-ci est appliqué à un réseau orienté connexion, il est déterminé pour chaque lien du réseau Li, un coût Ci fonction de la charge Ui du lien physique Li et de la charge moyenne Um sur la pluralité de liens physiques du réseau 10.

Sachant que le lien L11 est uniquement utilisé pour router la communication F1, la charge U11 du lien L11 est de 0,5 (la communication F1 nécessite la moitié de la capacité de chaque lien utilisé pour son routage). De même, sachant que la communication F2 est routée suivant le chemin défini par la succession de liens L14 et L13 et que ces liens ne sont pas utilisés pour router une autre communication, les charges respectives U14 et U13 des liens L14 et L13 sont égales et valent 0,2. De même, la charge du lien L15 est de 0,1. De plus, puisque aucune des communications F1, F2 et F3 n'est routée via le lien L12, sa charge U12 est nulle.

La charge moyenne Um sur la pluralité de liens physiques du réseau correspond à la somme des charges respectives Ui de chaque lien Li du réseau divisée par le nombre de liens du réseau 10. Dans la situation décrite en référence à la figure 1a, Um est égale à 0,2. Um est donnée par la formule:

$$U_m = \frac{U_{11} + U_{12} + U_{13} + U_{14} + U_{15}}{5} = \frac{0,5 + 0 + 0,2 + 0,2 + 0,1}{5}$$

Ayant déterminé les charges Ui respectives de chaque lien Li et la charge moyenne Um, il est associé à chaque lien Li un coût fonction de la charge Ui et de la charge Um. Comme précédemment mentionné, le coût Ci associé à chaque lien Li est donnée par la formule suivante: $C_i = (U_i - U_m)^2$.

Les différents coûts associés à chaque liens sont indiqués dans la figure 2a. Par exemple, le coût C11 associé au lien L11 est égal à 0,09 et le coût C12 associé au lien L12 est égal à 0,04.

Selon le procédé de l'invention, les différents chemins possibles entre le noeud entrant N12 et le noeud sortant N13 sont alors déterminés en se basant sur les coûts Ci. Dans notre exemple, un chemin est possible, si un tiers de la capacité de chaque lien de la succession de liens le définissant est disponible pour pouvoir convoyer de façon satisfaisante le flux induit par la communication F4. En effet, d'après les caractéristiques de la communication F4, une capacité de transmission de 0,3 est nécessaire sur chaque lien permettant son routage pour qu'elle soit réalisée avec une qualité de service satisfaisante.

Sachant que la charge du lien L12 est nulle, un chemin possible pour le routage de la communication F4 peut être le chemin défini par le lien physique L12 reliant les noeuds N12 et N13. D'autre part, puisque seulement un cinquième de la capacité du lien L13 est utilisé et qu'un dixième de la capacité du lien L15 est utilisé pour le routage des communications F3 et F2, un autre chemin possible pour le routage de la communication possible consiste en la succession de liens L15 et L13. De même, le chemin défini par la succession des liens L11, L14 et L13 pourrait également être satisfaisant pour le routage de la communication F4.

Trois chemins alternatifs sont donc possibles pour le routage de la communication F4. Selon le procédé de l'invention lorsqu'il est appliqué à un réseau orienté connexion, un coût global Cg est calculé pour chacun de ces chemins possibles. Le coût global Cg d'un chemin est égal à la somme des coûts Ci associés à chaque lien physique Li constituant le chemin. Par exemple, le coût global du chemin empruntant les liens L11, L14 et L13 est égal à la somme des coûts C11, C14 et C13. De même, le coût global du chemin empruntant uniquement le lien L12 est égal au coût C12.

La table représentée à la figure 2a indique le coût global Cg calculé pour chacun des trois chemins possibles pour le routage de la communication F4. Une fois les coûts globaux associés à chaque chemin possible calculés, le chemin qui minimise le coût global Cg est choisi pour router la nouvelle communication F4. En partant de la situation décrite ci-dessus, le chemin qui a le plus faible coût global est le chemin empruntant successivement les liens L15 et L13.

L'utilisation d'un coût Ci représentant l'écart de la charge d'un lien avec la charge moyenne des liens du réseau, en combinaison avec le choix d'un chemin minimisant un coût global basé sur les coûts Ci, favorise grandement l'équilibrage de la charge global du réseau. En effet, une nouvelle communication est toujours routée sur des liens dont la charge est faiblement différente de la charge moyenne des liens du réseau 10.

En référence aux figures 1b et 2b, les différentes étapes mises en oeuvre pour la détermination d'un ensemble de liens pour le routage d'une nouvelle communication vont être maintenant détaillées pour un réseau de type non orienté connexion.

Comme mentionné précédemment, dans un réseau non-orienté connexion, une communication est réalisée entre au moins deux noeuds d'une connexion virtuelle. La connexion virtuelle est assignée à un arbre couvrant associé à un noeud racine.

La figure 1b représente un réseau de communication 20 de type non-orienté connexion, comportant cinq noeuds N21,..., N25 et sept liens L21,..., L27. Parmi les cinq noeuds, les noeuds N24 et N25 sont des routeurs et correspondent à des noeuds racines du réseau 20 auxquelles sont associés deux arbres couvrants distincts. Les branches de chaque arbre couvrant correspondent à des liens Li du réseau et permettent de réaliser une communication entre n'importe quel noeud Ni (feuille de l'arbre couvrant) du réseau 20.

Les branches de l'arbre couvrant associé au noeud racine N24 sont représentées en pointillés sur la figure 1b alors que les branches de l'arbre couvrant associé au noeud racine N25 sont représentées en traits pleins. Comme le montre la figure 1b, un lien (en l'occurrence le lien L24) peut constituer une branche de deux arbres couvrants distincts.

D'autre part, il est considéré que les sept liens L21,..., L27 possèdent la même capacité. Pour simplifier la compréhension des calculs mis en oeuvre par l'invention, on considérera par la suite que la capacité de chaque lien est égale à 2.

De plus, on part de l'hypothèse que trois connexions virtuelles EVC1, EVC2, EVC3 sont déjà assignées à l'un ou l'autre des deux arbres couvrant du réseau de communication 20.

Plus précisément, la première connexion virtuelle EVC1 est assignée au noeud racine N25. Cette connexion virtuelle EVC1, permet entre autre, d'acheminer en utilisant uniquement les branches de l'arbre associé au noeud racine N25:

- une première communication entre les noeuds N21 et N22 nécessitant une capacité de 0,5;
- une second communication entre les noeuds N22 et N21 nécessitant une capacité de 0,5;
- une troisième communication entre les noeuds N24 et N21 nécessitant une capacité de 0,2;
- une quatrième communication entre les noeuds N22 et N24 nécessitant une capacité de 0,2.

La seconde connexion virtuelle EVC2 est, quant à elle, assignée au noeud racine N24. L'assignation de cette seconde connexion virtuelle permet le routage de quatre communications en empruntant uniquement les liens appartenant à l'arbre associé à la racine N24. Les quatre communications consistent en:

- une première communication entre les noeuds N24 et N25 nécessitant une capacité de 0,5;
- une second communication entre les noeuds N25 et N24 nécessitant une capacité de 0,2;
- une troisième communication entre les noeuds N23 et N25 nécessitant une capacité de 0,2;
- une quatrième communication entre les noeuds N24 et N23 nécessitant une capacité de 0,5.

La troisième connexion virtuelle EVC3 est également assignée au noeud racine N24. L'assignation de cette troisième connexion virtuelle permet le routage de trois communications en empruntant uniquement les liens appartenant à l'arbre associé à la racine N24. Les trois communications ayant respectivement lieu entre:

- les noeuds N23 et N21 en nécessitant une capacité de 0,5;
- les noeuds N21 et N23 en nécessitant une capacité de 0,2;
- les noeuds N22 et N23 nécessitant une capacité de 0,2;

Partant de cette situation, il est alors considéré qu'une nouvelle communication d'une nouvelle connexion virtuelle EVC4 doit être routée sur le réseau 20. D'après les caractéristiques techniques de la nouvelle connexion virtuelle EVC4 telle qu'indiquées dans sur la figure 2b, il est nécessaire :

- qu'une bande passante de capacité 0,2 soit disponible entre les noeuds N25 et N21 du réseau 20 pour la réalisation d'une première communication ; et
- qu'une bande passante de capacité 0,2 soit disponible entre les noeuds N21 et N25 pour le routage d'une seconde communication.

Conformément au procédé de l'invention, il est déterminé, pour chaque lien du réseau $L_i$ un coût $C_i$ fonction de la charge $U_i$ du lien physique $L_i$ et de la charge moyenne $U_m$ sur la pluralité de liens physiques du réseau 20.

Nous détaillerons à présent le calcul des différents coûts $C_i$ dans la situation illustrée par la figure 1b. Comme précédemment indiqué, la connexion virtuelle EVC1 est assignée à l'arbre couvrant associé au noeud racine N25. En conséquence, les communications supportées par cette connexion virtuelle sont routées par l'ensemble ou une partie des liens représentés en trait plein sur la figure 1b. Les connexions virtuelles EVC2 et EVC3 sont, quant à elles, assignées à l'arbre couvrant associé au noeud racine N24 et les communications supportées par ces connexions virtuelles empruntent uniquement des liens représentés en pointillé.

Partant de cette situation, le lien L21 physique reliant les noeuds N21 et N22 (appartenant uniquement à l'arbre couvrant associé au noeud racine N24) est uniquement utilisé pour le routage de la première communication de la connexion virtuelle EVC3 qui utilise une bande passante de 0,2. La bande passante totale utilisée sur le lien L21 est donc de 0,2. De plus, la charge du lien L21 correspondant au rapport de sa bande passante utilisée sur sa capacité maximale, la valeur U21 est égale à 0,1.

Le lien L27 (appartenant uniquement à l'arbre couvrant associé au noeud racine N25) est utilisé, quant à lui, pour le routage de :

- La première communication de la connexion virtuelle EVC1 qui utilise une bande passante de 0,5 ;
- seconde communication de la connexion virtuelle EVC1 qui utilise une bande passante de 0,5 ;
- la quatrième communication de la connexion virtuelle EVC1 qui utilise une bande passante de 0,2 ;

Donc la bande passante utilisée sur le lien L27 reliant les noeuds N25 et N21 est de 1,2 (résultat trouvé en additionnant la bande passante utilisé par l'ensemble des communications routées par ce lien 0,5+0,5+0,2). La charge du lien L27 correspondant au rapport de sa bande passante utilisée sur sa capacité maximale, la valeur U27 est égale à 0,6.

De même, Le lien L24 appartenant aux deux arbres couvrant est utilisé, pour le routage de :

- la troisième communication de la connexion virtuelle EVC1 qui utilise une bande passante de 0,2 ;
- la quatrième communication de la connexion virtuelle EVC1 qui utilise une bande passante de 0,2 ;
- la première communication de la connexion virtuelle EVC2 qui utilise une bande passante de 0,5 ;
- la deuxième communication de la connexion virtuelle EVC2 qui utilise une bande passante de 0,2 ;
- la troisième communication de la connexion virtuelle EVC2 qui utilise une bande passante de 0,2 ;

La bande passante utilisée sur le lien L24 est alors de 1,3 et la charge U24 est égale à 0,65.

La charge moyenne Um sur la pluralité de liens physiques du réseau correspond à la somme des charges respectives Ui de chaque lien Li du réseau divisée par le nombre de liens du réseau 20. Dans la situation décrite en référence à la figure 1b, Um est égale à 0,4571. Um est donnée par la formule:

$$U_m = \frac{U_{21}+U_{22}+U_{23}+U_{24}+U_{25}+U_{26}+U_{27}}{7} = \frac{0,1+0,45+0,6+0,65+0,8+0+0,6}{7}$$

Comme cela a déjà été mentionné ci-dessus, le routage d'une nouvelle communication dans un réseau de communication non orienté connexion consiste à assigner la connexion virtuelle par laquelle la nouvelle communication est routée à l'un des arbres couvrants du réseau de communication.

Le réseau 20 illustré par la figure 1b possède deux noeuds racines N24 et N25. La nouvelle connexion virtuelle EVC4 peut donc être assignée à l'un ou l'autre de ces deux noeuds. L'ensemble de liens qui permettra le routage de la nouvelle communication sera toutes ou une partie des branches de l'arbre couvrant associé au noeud racine N24 si la connexion virtuelle EVC4 est assignée au noeud racine N24. Alternativement, la connexion EVC4 peut être assignée au noeud racine N25 et l'ensemble de liens pour le routage sera constitué de branches de l'arbre couvrant associé à cette racine.

Selon une variante, dite non prédictive, du procédé de l'invention appliqué à un réseau non-orienté connexion, le coût global Cg correspond à la somme des coûts Ci associés à chaque lien (branche) d'un arbre couvrant. Par exemple, le coût global Cg de l'arbre couvrant associé au noeud racine N24 est égal à la somme des coûts C21, C22, C24 et C25 associés aux liens (branches) L21, L22, L24 et L25.

La deuxième colonne de la table représentée à la figure 2b indique le coût global Cg calculé pour chacun des deux arbres couvrant du réseau de communication 20 en considérant que la connexion virtuelle EVC1 est assignée au noeud racine N25 et que les connexions virtuelles EVC2, EVC3 sont assignées au noeud racine N24.

Une fois les coûts globaux associés à chaque arbre couvrant calculés, l'arbre couvrant qui minimise le coût global Cg est choisi pour l'assignation de la nouvelle connexion virtuelle. D'après les différents coûts indiqués dans la table 2b, la connexion virtuelle EVC4 est assignée au noeud racine N24 et la nouvelle communication sera donc routée en empruntant des branches ce tee arbre.

Selon la première variante décrite, le trafic induit par la nouvelle connexion virtuelle n'est pas pris en considération pour le choix de son assignation à l'un quelconques des arbres couvrants du réseau 20.

Conformément à ce qui a été décrit en référence aux figures 1a et 2a, il est à également à noter que, pour un réseau de type orienté connexion, la charge induite par la nouvelle communication n'était pas non plus prise en considération pour la détermination du meilleur chemin. En effet, le nombre important de chemins possibles pouvant être très élevés, une variante prédictive engendrerait un trop grand nombre de calcul et le système de gestion du réseau ne pourrait pas sélectionner un chemin pour le routage d'une nouvelle communication dans un temps imparti satisfaisant.

Or, dans un réseau de communication non-orienté connexion, le nombre de noeuds racines (et donc d'arbres couvrants) est limité et le surplus de calcul engendré par la prise en considération de la nouvelle connexion virtuelle dans le choix de l'arbre couvrant n'est donc pas trop important.

En conséquence, il peut être envisagé une seconde variante, dite prédictive, du procédé de l'invention appliqué à un réseau non-orienté connexion, dans laquelle le trafic induit par la nouvelle connexion virtuelle est pris en considération pour le choix de son assignation à l'un quelconque des arbres couvrants du réseau 20.

Dans cette variante, pour chacun des arbres couvrants, les coûts Ci associés à chaque lien Li du réseau 20 sont déterminés en considérant que la connexion virtuelle EVC4 a été assignée à l'arbre couvrant. Le coût global Cg représente alors la somme des coûts Ci associés à la pluralité de liens du réseau 20 modifiés par la prise en compte du trafic induit par la nouvelle connexion EVC4.

En partant de la situation telle que décrite par la figure 1b (la connexion EVC1 assignée au noeud racine N25 et les connexions EVC2 et EVC3 assignées au noeud racine N24), les charges respectives des sept liens du réseau 20 sont, au moment où la connexion EVC4 doit être assignée à l'un des deux arbres couvrant, sont égales aux valeurs indiquée dans la table suivant :

| Lien Li | Charge Ui |
|---------|-----------|
| L21 | U21 = 0,1 |
| L22 | U22 = 0,45 |
| L23 | U23 = 0,6 |
| L24 | U24 = 0,65 |
| U25 | U25 = 0,8 |
| L26 | U26 = 0 |
| L27 | U27 = 0,6 |

Considérer que la nouvelle connexion virtuelle EVC4 est assignée au noeud racine N24 consiste à considérer, d'après les caractéristiques de la connexion EVC4, que la charge U24 du lien (branche) L24 passe de la valeur 0,65 à la valeur 0,85 et la charge U22 du lien L22 passe de la valeur 0,45 à la valeur 0,65. Les charges respectives des autres liens restent inchangées.

La nouvelle charge moyenne Um est alors de 0,5143 et les coûts Ci associés à chaque lien du réseau 20 sont réestimés. Une fois les coûts Ci réestimés, le coût global Cg consistant à la somme des coûts Ci réestimés associés à la pluralité des liens du réseau 20 est calculé. Comme indiqué dans la troisième colonne de la table illustrée à la figure 2b, le coût global Cg obtenu en considérant que la connexion EVC4 a été assignée à l'arbre couvrant associé au noeud racine N24 est égal à 0,663 (Cg = C21 + C22 + C23 + C24+ C25 + C26 + C27, avec tous les Ci réestimés).

Considérer que la nouvelle connexion virtuelle EVC4 est assignée au noeud racine N25 consiste à considérer que la charge U23 du lien L23 prend comme nouvelle valeur 0,8 et que la charge des autres liens restent inchangés. La nouvelle charge moyenne Um vaut alors 0,4857.

Le coût global Cg obtenu en considérant que la connexion a été assignée à l'arbre couvrant associé au noeud racine N25 est alors égal à 0,623.

Conformément à la variante prédictive, la connexion virtuelle EVC4 est assignée à l'arbre couvrant qui minimise le coût global Cg. D'après les coûts globaux précédemment obtenus, la connexion EVC4 est alors réellement assignée à l'arbre couvrant associé au noeud racine N25.

L'utilisation des coûts Ci et d'un coût global Cg constitue une méthode heuristique pour équilibrer du mieux possible la charge des différents liens Li du réseau. Une heuristique peut être considérée comme un algorithme qui fournit rapidement une solution réalisable mais pas nécessairement optimale à un problème d'optimisation. Le fait de prendre en considération la charge induite par la nouvelle connexion virtuelle EVC4 dans le calcul des coûts Ci et du coût global Cg permet d'équilibrer la charge des différents liens du réseau de façon plus optimale en déterminant avec plus de précision l'arbre couvrant auquel doit être assignée la nouvelle connexion virtuelle.

La sélection du meilleur chemin pour le routage d'une nouvelle communication dans un réseau orienté connexion et la sélection d'un arbre couvrant pour le routage d'une nouvelle communication dans un réseau non-orienté connexion sont réalisées à chaque fois que l'opérateur du réseau reçoit une demande de nouvelle communication. La sélection et le choix du routage de la nouvelle communication s'effectue en ligne.

Cependant, pour des raisons qui lui sont propres (maintenance de certains éléments du réseau, optimisation de l'utilisation global du réseau) un opérateur peut effectuer périodiquement un redéploiement de l'ensemble des communications présentement routées sur le réseau. Ce redéploiement est effectué, hors ligne, en prenant généralement le soin de prévenir les utilisateurs que leurs communications ne pourront plus être assurées pendant une période nécessaire au redéploiement.

Suite à ce redéploiement, les communications routées selon un ensemble de liens avant que le redéploiement n'ait lieu, seront routées par le même ensemble de liens ou par un nouvel ensemble de liens en fonction des opérations effectuées par l'opérateur sur son réseau lors du redéploiement.

Entre deux redéploiements successifs, l'opérateur a pu recevoir plusieurs demandes de nouvelles communications selon un ordre donné. De plus, l'opérateur peut alors avoir choisi, pour chaque nouvelle communication, un ensemble de liens conformément à l'une des variantes du procédé telle que précédemment décrites afin d'équilibrer du mieux possible la charge existante sur les différents liens du réseau.

Cependant, si les demandes de nouvelles communications étaient arrivées avec un ordre différent, la réalisation du procédé aurait peut être pu aboutir à la sélection d'autres ensembles de liens pour chaque nouvelle communication et aboutir à une situation dans laquelle la répartition globale de la charge sur l'ensemble des liens du réseau était plus équitable.

Ainsi, dans certains cas, le redéploiement du réseau peut être réalisé par l'opérateur dans le but de vérifier si une meilleure répartition de la charge peut être obtenue.

Avantageusement, le procédé selon l'invention comporte une étape de calcul d'un coût de déploiement Cd sur le réseau 10, 20 pour un ensemble de communications routées sur le réseau 10, 20. Comme mentionnées ci-dessus, ces différentes communications ont été reçues sur le réseau selon un ordre de séquencement donné. Le coût de déploiement correspond à la somme des coûts Ci associés à la pluralité des liens du réseau 10, 20.

Afin d'optimiser la répartition de la charge sur les différents liens lors du redéploiement de l'ensemble de communications, il est recalculé, pour chaque communication de l'ensemble, un ensemble de liens physiques qui minimise le coût global en changeant l'ordre de séquencement des communications de l'ensemble. Une fois les différents liens physiques déterminés pour chacune des communications de l'ensemble, le coût de déploiement Cd est calculé. On détermine alors l'ordre de séquencement pour lequel le coût de déploiement Cd est minimum et on redéploie les communications selon l'ordre de séquencement qui minimise le coût de déploiement.

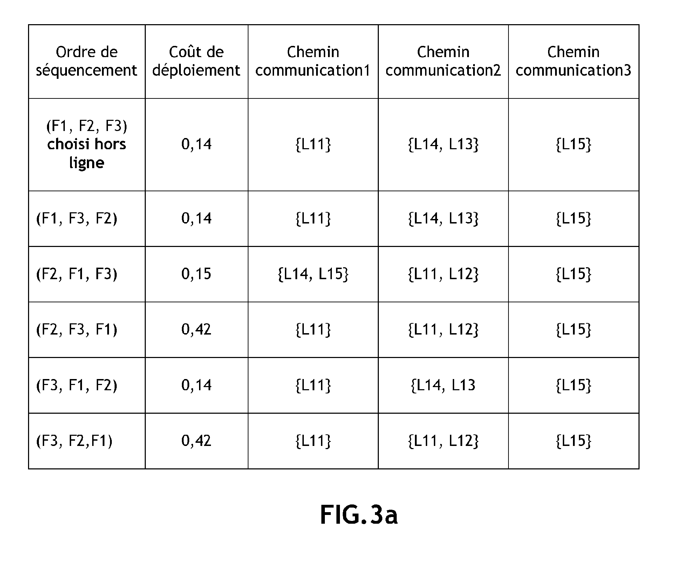

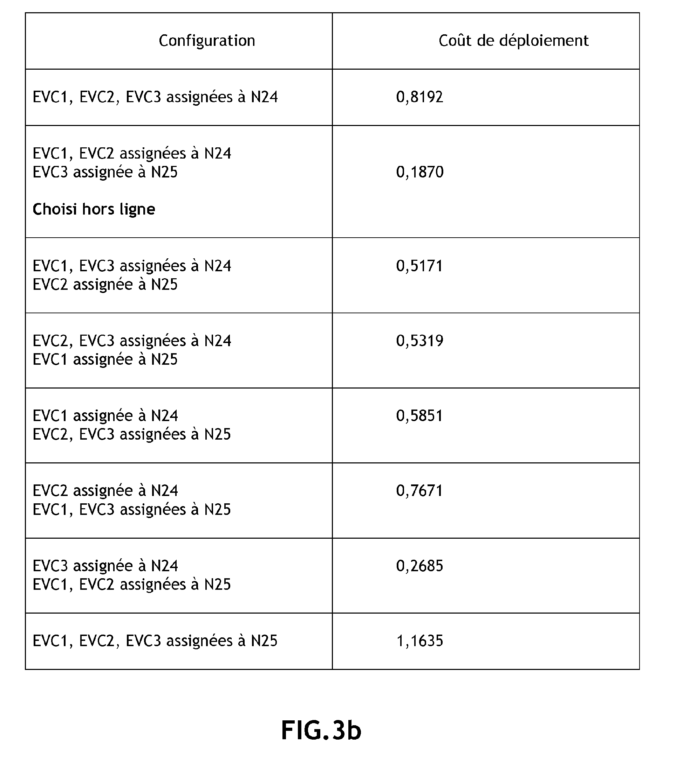

Les différentes étapes mises en oeuvre lors d'un redéploiement vont être détaillées, dans un premier temps, dans le cas d'un réseau orienté connexion en référence aux figures 1a et 3a. Suivra, dans un deuxième temps, une description détaillée des étapes mises en oeuvre lors du déploiement pour un réseau non orienté connexion en référence aux figures 1b et 3b.

Il est considéré que le redéploiement du réseau 10 représenté à la figure 1a est effectué alors que les trois communications F1, F2, F3 sont routées. Les trois communications F1, F2 et F3 sont les communications précédemment décrites. Ces trois communications ont été reçues et routés selon un ordre de séquencement donné sur le réseau 10

Lors du redéploiement du réseau 10, il est déterminé, hors ligne, tous les ordres de séquencement possibles avec lesquels les trois communications auraient pu être reçues et routées sur le réseau 10. Sachant qu'il y a trois communications F1, F2 et F3, il y a « factorielle 3 » (3 !) ordres de séquencement possibles, comme cela est représenté sur la figure 3a. Un des ordres de séquencement possible est l'ordre F2, F1, F3. Un autre ordre possible est l'ordre F1, F2, F3.

Pour chaque ordre de séquencement possible, il est successivement choisi, en respectant l'ordre de séquencement, un chemin pour chaque communication.

Ainsi, si l'on considère l'ordre de séquencement F1, F2, F3, on choisit d'abord « virtuellement» un chemin pour la communication F1 en considérant qu'aucune autre communication n'est routée sur le réseau. Dans la mesure où il est considéré qu'aucune communication n'est routée, chaque lien Li du réseau 10 possède un coût Ci égal à zéro. Le choix du chemin pour la communication peut alors être effectué en minimisant le nombre de saut entre le noeud d'entrée N11 et le noeud de sortie N12. Le chemin virtuellement choisi pour le routage de la communication F1 est donc le chemin défini par le lien L11.

Une fois qu'un chemin a été virtuellement choisi pour la communication F1, on choisit virtuellement un chemin pour la communication F2 en se basant sur le calcul du coût global Cg tel que précédemment décrit. Le choix du chemin de la communication F2 est effectué en considérant que la communication F1 est routée sur le lien L11. Comme indiqué sur la première ligne de la table 3a, le chemin qui minimise le coût global est le chemin défini par la succession de liens L4, L3. Ce chemin est donc choisi virtuellement pour le routage de la communication F2. Le même processus est alors effectué pour déterminer virtuellement un chemin pour la communication F3 en considérant que le réseau 10 route déjà les communications F1 et F2 selon les chemins virtuels précédemment sélectionnés.

Si l'on considère l'ordre de séquencement F2, F1, F3, les chemins virtuellement choisis pour le routage des communications F2, F1 indiqués sur la troisième ligne de la table 3a.

Lorsque, pour chaque ordre de séquencement possible, un chemin a été virtuellement choisi pour chacune des communications, il est calculé un coût de déploiement Cd pour cet ordre de séquencement. Le coût de déploiement correspond à la somme des coûts Ci associés à la pluralité de liens du réseau en considérant que les communications sont routées selon les chemins virtuellement choisis.

Comme indiqué sur la figure 3a, le coût de déploiement obtenu avec l'ordre de séquencement F1, F2, F3 est de 0,14. Le coût de déploiement obtenu avec l'ordre de séquencement F2, F1, F3 est de 0,15.

Le redéploiement effectif des communications est alors effectué selon l'ordre de séquencement qui minimise le coût de déploiement et avec les chemins virtuellement choisis pour cet ordre de séquencement. D'après la figure 3a, le plus petit coût de déploiement est obtenu lorsque la communication F2 est routée après la communication F1 et avant la communication F3.

Après que le redéploiement a eu lieu, la communication F1 est routée sur le chemin L11, la communication F2 est routée sur le chemin défini par la succession des liens L14 et L13 et, la communication F3 est routée sur le lien L15. Il est à noter que, dans notre exemple, la façon dont étaient routées les trois communications F1, F2 et F3 avant le redéploiement était celle qui équilibrait au mieux la charge sur les différents liens du réseau 10. En conséquence, après le redéploiement, les communications F1, F2 et F3 sont encore routées sur ces chemins. Une autre situation aurait pu conduire à modifier un des chemins ou l'ensemble des chemins.

Les différentes étapes mises en oeuvre lors d'un redéploiement vont être maintenant détaillées dans le cas d'un réseau non orienté connexion en référence à la figure 1b.

Il est considéré que le redéploiement du réseau 20 représenté à la figure 1b est effectué alors que les trois connexions virtuelles EVC1, EVC2 et EVC3 sont utilisées pour le routage d'une pluralité de communications. Les trois connexions virtuelles EVC1, EVC2 et EVC3 sont les connexions précédemment décrites. Ces trois connexions ont été assignées selon un ordre de séquencement donné sur le réseau 20.

Lors du redéploiement du réseau 20, il est déterminé, hors ligne, tous les ordres de séquencement possibles avec lesquels les trois connexions virtuelles auraient pu être assignées sur le réseau 20. Sachant qu'il y a trois connexions virtuelles EVC1, EVC2 et EVC3, il y a « factorielle 3 » ordres de séquencement possibles.

Pour chaque ordre de séquencement possible, il est successivement choisi en respectant l'ordre de séquencement, un arbre couvrant pour l'assignation pour chaque connexion virtuelle.

Ainsi, si l'on considère l'ordre de séquencement EVC3, EVC1, EVC2, on choisit d'abord « virtuellement » d'assigner la connexion virtuelle EVC3 à l'un des deux arbres couvrant en considérant qu'aucune connexion virtuelle n'est déjà assignée à un quelconque noeud racine du réseau 20. Dans la mesure où il est considéré qu'aucune connexion virtuelle n'est déjà assignée, chaque lien Li du réseau 20 possède un coût Ci égal à zéro. Le choix d'assigner la connexion virtuelle EVC3 au noeud racine N24 ou au noeud racine N25 peut être effectué en utilisant, par exemple, une méthode de routage basée sur le coût monétaire des liens des deux arbres couvrants.

Une fois que la connexion virtuelle EVC3 a été « virtuellement » assignée à l'un des deux arbres couvrant, on choisi d'assigner la connexion virtuelle EVC1 à un arbre couvrant en se basant sur le calcul du coût global Cg tel que précédemment décrit en considérant que la connexion virtuelle a déjà été assignée à arbre couvrant. Le calcul du coût global peut être effectué en mode prédictif ou en mode non prédictif. Puis, on choisit virtuellement d'assigner la connexion virtuelle EVC2 en se basant sur une estimation du coût global sachant que les connexions EVC3 et EVC1 ont déjà été assignées.

Lorsque, pour chaque ordre de séquencement possible, un arbre couvrant a été virtuellement choisi pour l'assignation de chacune des connexions virtuelles, il est calculé un coût de déploiement Cd pour cet ordre de séquencement. Le coût de déploiement Cd correspond à la somme des coûts Ci associés à la pluralité des liens du réseau en considérant que les connexions ont été assignées aux arbres couvrants virtuellement choisis.

Le redéploiement effectif des communications est alors effectué selon l'ordre de séquencement qui minimise le coût de déploiement Cd et avec les assignations de connexions virtuelles virtuellement choisies pour cet ordre de séquencement.

Dans un réseau non orienté connexion, une autre possibilité pour redéployer astucieusement les communications afin d'équilibrer au mieux la charge supportée par l'ensemble des liens du réseau 20 consiste à déterminer, hors ligne, toutes les configurations possibles d'assignation des connexions virtuelles et de calculer le coût de déploiement associé à chacune de ces configurations.

Les différentes étapes mises en oeuvre lors d'un tel redéploiement vont être détaillées en référence aux figures 1b et 3b.

Il est de nouveau considéré que le redéploiement du réseau 20 représenté à la figure 1b est effectué alors que les trois connexions virtuelles EVC1, EVC2 et EVC3 sont utilisées pour le routage d'une pluralité de communications. Les trois connexions virtuelles EVC1, EVC2 et EVC3 sont les connexions précédemment décrites.

Comme montrée sur la figure 3b il existe deux puissance trois configurations possibles sachant qu'il y a deux arbres couvrants et trois connexions virtuelles. De façon générale le nombre de configurations possibles est donné par la formule $Na^{Nc}$ où Na est le nombre d'arbres couvrants du réseau et le Nc est le nombre de connexions virtuelles à redéployer.

Pour chaque configuration de déploiement possible, il est calculé un coût de déploiement Cd. Le coût de déploiement Cd correspond à la somme des coûts Ci associés à la pluralité des liens du réseau 20 en considérant que les connexions virtuelles sont assignées selon la configuration de déploiement.

Comme indiqué sur la figure 3b, le coût de déploiement obtenu avec la configuration consistant à assigner les trois connexions virtuelles EVC1, EVC2 et EVC3 au noeud racine N24 est de 0,8192. Le coût obtenu avec la configuration consistant à assigner les connexions virtuelles EVC1 et EVC2 au noeud racine N24 et la connexion virtuelle EVC3 au noeud racine N25 est de 0,1870.

Le redéploiement effectif des communications est alors effectué avec la configuration qui minimise le coût de déploiement. D'après la figure 3b, le plus petit coût de déploiement est obtenu lorsque les connexions virtuelles EVC1 et EVC2 sont assignées au noeud N24 et la connexion virtuelle EVC3 est assignée au noeud N25.

Il est a noté que, dans notre exemple, l'assignation des connexions virtuelles après que le redéploiement a eu lieu, est différente de l'assignation d'origine. Ceci est dû au fait que la configuration obtenue suite au redéploiement confère un meilleure équilibrage de la charge du réseau 20. Si les connexions virtuelles avaient déjà été assignées selon la configuration minimisant le coût de déploiement avant le redéploiement, aucune modification n'aurait eu lieu suite au redéploiement du réseau 20.

Lors du redéploiement des communications du réseau 10, 20 il peut être avantageux de créer des règles d'ordonnancement à partir de statistiques effectuées à partir du coût de déploiement Cd calculé pour chaque ordre de séquencement et des caractéristiques techniques des communications dudit ensemble de communications.

En effet, il peut, par exemple, être déterminé que, lorsque les premières communications d'un ordre de séquencement possible sont celles pour lesquelles les débits sont le plus élevés, le coût de déploiement Cd calculé pour cet ordre de séquencement est faible alors que le coût de déploiement est très élevé lorsque ces communications sont, dans un autre ordre de séquencement, parmi les dernières à être routées. Les règles d'ordonnancement crées peuvent également être réalisées en considérant d'autres caractéristiques techniques des communications tel que notamment le temps de transmission maximal ou la gigue maximale autorisée pour chacune des communications.

De telles règles d'ordonnancement créées hors ligne, peuvent être avantageusement utilisées lorsque plusieurs communications sont reçues simultanément, en ligne, sur le réseau 10, 20 pour optimiser l'équilibrage de la charge des liens du réseau 10, 20. Ainsi lorsque plusieurs nouvelles communications sont reçues simultanément, il est déterminé, selon le procédé de l'invention, un ordre de routage avec lequel ces communications doivent être routées à partir des règles d'ordonnancement et les caractéristiques des communications. Il est alors successivement choisi, en respectant l'ordre de routage déterminé, un ensemble de liens pour le routage de chaque communication en utilisant un calcul de coût global Cg tel que décrit précédemment.

## Revendications

1. Procédé de routage d'une communication dans un réseau (10 ; 20) de communication comportant une pluralité de noeuds (Ni) et une pluralité de liens physiques (Li) reliant chacun directement deux noeuds (Ni) dudit réseau (10 ; 20) de communication, **caractérisé en ce qu'**on détermine, pour le routage d'une nouvelle communication, un coût (Ci) associé à chaque lien (Li) physique dudit réseau (10 ;20), ledit coût (Ci) étant fonction de la charge (Ui) dudit lien physique (Li) et de la charge moyenne (Um) sur ladite pluralité de liens physiques dudit réseau (10 ; 20) de communication, et **en ce que** l'on choisit de router ladite nouvelle communication sur un ensemble de liens physiques (Li) pour lequel un coût global (Cg), calculé à partir desdits coûts (Ci), est minimisé, ledit réseau de communication (20) étant du type non-orienté connexion et comportant une pluralité d'arbres couvrants associés chacun à un noeud racine dudit réseau (20), et ladite nouvelle communication devant être routée sur une connexion virtuelle assignée à l'un des arbres couvrants, ledit ensemble de liens (Li) physiques correspondant à l'un des arbres couvrants et ledit coût global (Cg) étant la somme des coûts (Ci) associés à chaque lien (Li) physiques constituant ledit arbre couvrant, ledit procédé comprenant une étape de sélection dudit arbre couvrant minimisant le coût global (Cg) pour l'assignation de ladite connexion virtuelle.

2. Procédé selon la revendication 1, **caractérisé en ce qu'**il comprend les étapes de déterminer, pour chacun des arbres couvrants, un coût (Ci) associé à chaque lien (Li) physique dudit réseau (20) en considérant que ladite connexion virtuelle a été assignée audit arbre couvrant et de calculer le coût global (Cg) en sommant les coûts (Ci) associés à la pluralité de liens physiques (Li).

3. Procédé selon l'une quelconque des revendications précédentes, **caractérisé en ce que** l'on calcule un coût de déploiement (Cd) sur ledit réseau (10 ; 20) pour un ensemble de communications qui sont effectivement routées sur ledit réseau (10 ; 20) et qui ont été reçues selon un ordre de séquencement donné.

4. Procédé selon la revendication 3, **caractérisé en ce qu'**il comprend, en outre, une étape de redéploiement dudit ensemble de communications, ladite étape de redéploiement comprenant :

   - le recalcul, pour chaque communication dudit ensemble de communication, d'un ensemble de liens physiques (Li) qui minimise le coût global (Cg) en changeant l'ordre de séquencement des communications dudit ensemble ;
   - la détermination de l'ordre de séquencement des communications pour lequel le coût de déploiement (Cd) est minimum ;
   - le redéploiement des communications dudit ensemble selon l'ordre de séquencement qui minimise ledit coût de déploiement (Cd).

5. Procédé selon la revendication 4, **caractérisé en ce que** l'étape de redéploiement comprend en outre la création de règles d'ordonnancement à partir de statistiques effectuées à partir du coût de déploiement (Cd) calculé pour chaque ordre de séquencement et des caractéristiques techniques des communications dudit ensemble de communications.

6.  Procédé selon la revendication 5, **caractérisé en ce que**, pour le routage d'une pluralité de nouvelles communications reçues simultanément par ledit réseau (10 ; 20) :

    - on détermine un ordre de routage avec lequel les nouvelles communications de ladite pluralité de communications doivent être routées en fonction des caractéristiques de chacune des communications et des dites règles d'ordonnancement ; et
    - on route les nouvelles communications selon l'ordre de routage déterminé, chaque nouvelle communication étant routée sur un ensemble de liens physiques (Li) qui minimise le coût global (Cg).

7.  Système de gestion de routage d'une communication dans un réseau (10 ; 20) de communication comportant une pluralité de noeuds (Ni) et une pluralité de liens physiques (Li) reliant chacun directement deux noeuds (Ni) du dit réseau (10 ; 20) de communication, **caractérisé en ce que** ledit système de gestion est adapté, pour le routage d'une nouvelle communication :

    - à déterminer un coût (Ci) associé à chaque lien (Li) physique dudit réseau (10 ; 20), ledit coût (Ci) étant fonction de la charge (Ui) dudit lien (Li) physique et de la charge moyenne (Um) sur ladite pluralité de liens physiques (Li) dudit réseau (10 ; 20) ; et
    - à choisir de router ladite nouvelle communication sur un ensemble de liens physiques (Li) pour lequel un coût global (Cg), calculé à partir desdits coûts (Ci), est minimisé,

    ledit réseau de communication (20) étant du type non-orienté connexion comportant une pluralité d'arbres couvrants associés chacun à un noeud racine dudit réseau (20), et ladite nouvelle communication devant être routée sur une connexion virtuelle assignée à l'un des arbres couvrants, ledit ensemble de liens (Li) physiques correspondant à l'un des arbres couvrants et ledit coût global (Cg) étant la somme des coûts (Ci) associés à chaque lien (Li) physiques constituant ledit arbre couvrant, et ledit système de gestion étant adapté à sélectionner l'arbre couvrant minimisant le coût global (Cg) pour l'assignation de ladite connexion virtuelle.

8.  Système de gestion selon la revendication 7, **caractérisé en ce que** ledit système de gestion est adapté à :

    - déterminer, pour chacun des arbres couvrants, le coût (Ci) associé à chaque lien (Li) physique dudit réseau (20) en considérant que ladite connexion virtuelle a été assignée à l'arbre couvrant et calculer le coût global (Cg) en sommant les coûts (Ci) associés à la pluralité de liens physiques (Li).

9.  Système de gestion selon l'une quelconque des revendications 7 à 8, **caractérisé en qu'**il est, en outre, adapté à calculer un coût de déploiement (Cd) sur ledit réseau (10 ; 20) pour un ensemble de communications qui sont effectivement routées sur ledit réseau (10 ; 20) et qui ont été reçues selon un ordre de séquencement donné.

10. Système de gestion selon la revendication 9, **caractérisé en ce qu'**il est adapté, en outre, à effectuer un redéploiement dudit ensemble de communications, en :

    - recalculant, pour chaque communication dudit ensemble de communication, un ensemble de liens physiques (Li) qui minimise le coût global (Cg) en changeant l'ordre de séquencement des communications dudit ensemble ;
    - déterminant de l'ordre de séquencement des communications pour lequel le coût de déploiement (Cd) est minimum ;
    - redéployant les communications dudit ensemble selon l'ordre de séquencement qui minimise ledit coût de déploiement (Cd).

11. Système de gestion selon la revendication 10, **caractérisé en ce qu'**il est, en outre, adapté à créer, lors dudit redéploiement, des règles d'ordonnancement à partir de statistiques effectuées à partir du coût de déploiement (Cd) calculé pour chaque ordre de séquencement et des caractéristiques techniques des communications dudit ensemble de communications.

12. Système de gestion selon la revendication 11, **caractérisé en ce qu'**il est adapté, pour le routage d'une pluralité de nouvelles communications reçues simultanément par ledit réseau (10 ; 20) :

- à déterminer un ordre de routage avec lequel les nouvelles communications de ladite pluralité de communications doivent être routées en fonction des caractéristiques de chacune des communications et des dites règles d'ordonnancement ; et
- à router les nouvelles communications selon l'ordre de routage déterminé, chaque nouvelle communication étant routée sur un ensemble de liens physiques (Li) qui minimise le coût global (Cg).

FIG.1a

**FIG.1b**

| Chemin possible | Coût global |
|---|---|
| {L12} | 0,04 |
| {L15, L13} | 0,01 |
| {L11, L14, L13} | 0,09 |

# FIG.2a

| Arbre couvrant associé au nœud racine | Coût global (mode non prédictif) | Coût global (mode prédictif) |
|---|---|---|
| N24 | 0,2822 | 0,663 |
| N25 | 0,2869 | 0,623 |

# FIG.2b

| Ordre de séquencement | Coût de déploiement | Chemin communication1 | Chemin communication2 | Chemin communication3 |
|---|---|---|---|---|
| (F1, F2, F3) choisi hors ligne | 0,14 | {L11} | {L14, L13} | {L15} |
| (F1, F3, F2) | 0,14 | {L11} | {L14, L13} | {L15} |
| (F2, F1, F3) | 0,15 | {L14, L15} | {L11, L12} | {L15} |
| (F2, F3, F1) | 0,42 | {L11} | {L11, L12} | {L15} |
| (F3, F1, F2) | 0,14 | {L11} | {L14, L13 | {L15} |
| (F3, F2,F1) | 0,42 | {L11} | {L11, L12} | {L15} |

# FIG.3a

| Configuration | Coût de déploiement |
|---|---|
| EVC1, EVC2, EVC3 assignées à N24 | 0,8192 |
| EVC1, EVC2 assignées à N24<br>EVC3 assignée à N25<br><br>**Choisi hors ligne** | 0,1870 |
| EVC1, EVC3 assignées à N24<br>EVC2 assignée à N25 | 0,5171 |
| EVC2, EVC3 assignées à N24<br>EVC1 assignée à N25 | 0,5319 |
| EVC1 assignée à N24<br>EVC2, EVC3 assignées à N25 | 0,5851 |
| EVC2 assignée à N24<br>EVC1, EVC3 assignées à N25 | 0,7671 |
| EVC3 assignée à N24<br>EVC1, EVC2 assignées à N25 | 0,2685 |
| EVC1, EVC2, EVC3 assignées à N25 | 1,1635 |

# FIG.3b

Europäisches
Patentamt
European
Patent Office
Office européen
des brevets

**RAPPORT DE RECHERCHE EUROPEENNE**

Numéro de la demande

EP 10 15 0119

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DE 10 2004 003547 B3 (SIEMENS AG [DE]) 30 juin 2005 (2005-06-30) | 1-4,7-10 | INV. H04L12/56 |
| A | * alinéa [0007] - alinéa [0012] * | 5-6, 11-12 | |
| X,P | & US 2009/185491 A1 (SCHOLLMEIER GERO [DE] ET AL)) 23 juillet 2009 (2009-07-23) | 1-4,7-10 | |
| A,P | * alinéas [0003] - [0007] * <br> * alinéa [0011] * <br> ----- | 5-6, 11-12 | |
| A | US 2008/144511 A1 (MARCONDES CESAR A C [US] ET AL) 19 juin 2008 (2008-06-19) * alinéa [0017] * <br> ----- | 1-12 | |
| A | WO 2006/126924 A (ERICSSON GMBH [DE]; ERICSSON AB [SE]; SACHS JOACHIM [DE]; PRYTZ MIKAEL) 30 novembre 2006 (2006-11-30) * page 1, ligne 8 - page 7, ligne 29 * <br> ----- | 1-12 | |
| A | WO 03/061194 A (TROPIC NETWORKS INC [CA]) 24 juillet 2003 (2003-07-24) * alinéa [0003] - alinéa [0015] * <br> ----- | 1-12 | DOMAINES TECHNIQUES RECHERCHES (IPC) <br><br> H04L |
| A | WO 2007/053141 A (THOMSON LICENSING [FR]; LIU HANG [US]) 10 mai 2007 (2007-05-10) * page 3, ligne 15 - ligne 30 * * page 5, ligne 15 - ligne 20 * * page 6, ligne 5 - ligne 30 * * page 9, ligne 9 - ligne 29 * <br> ----- | 1-12 | |

Le présent rapport a été établi pour toutes les revendications

| Lieu de la recherche | Date d'achèvement de la recherche | Examinateur |
|---|---|---|
| Berlin | 25 février 2010 | Siebel, Christian |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 10 15 0119

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-02-2010

| Document brevet cité au rapport de recherche | Date de publication | Membre(s) de la famille de brevet(s) | Date de publication |
|---|---|---|---|
| DE 102004003547 B3 | 30-06-2005 | CN 1910875 A<br>WO 2005071899 A2<br>US 2009185491 A1 | 07-02-2007<br>04-08-2005<br>23-07-2009 |
| US 2009185491 A1 | 23-07-2009 | CN 1910875 A<br>DE 102004003547 B3<br>WO 2005071899 A2 | 07-02-2007<br>30-06-2005<br>04-08-2005 |
| US 2008144511 A1 | 19-06-2008 | AUCUN | |
| WO 2006126924 A | 30-11-2006 | AT 431661 T<br>CA 2606681 A1<br>CN 101204047 A<br>EP 1889411 A1<br>JP 2008543163 T<br>US 2009213849 A1 | 15-05-2009<br>30-11-2006<br>18-06-2008<br>20-02-2008<br>27-11-2008<br>27-08-2009 |
| WO 03061194 A | 24-07-2003 | AU 2002322877 A1<br>CA 2466905 A1 | 30-07-2003<br>24-07-2003 |
| WO 2007053141 A | 10-05-2007 | AUCUN | |

EPO FORM P0460

Pour tout renseignement concernant cette annexe : voir Journal Officiel de l'Office européen des brevets, No.12/82